# EUROPÄISCHE PATENTSCHRIFT

(11) **EP 2 726 343 B1**
(45) Veröffentlichungstag und Bekanntmachung des Hinweises auf die Patenterteilung: **07.08.2019**
(21) Anmeldenummer: 12725391.2
(22) Anmeldetag: 01.06.2012
(51) Int. Cl.: B60S 1/38

(54) **WISCHVORRICHTUNG, INSBESONDERE KRAFTFAHRZEUGSCHEIBENWISCHVORRICHTUNG**
WIPING DEVICE, IN PARTICULAR WIPING DEVICE FOR A MOTOR VEHICLE PANE
DISPOSITIF D'ESSUYAGE, EN PARTICULIER DISPOSITIF ESSUIE-GLACE DE VÉHICULE À MOTEUR

(30) Priorität: 28.06.2011 DE 102011078178
(43) Veröffentlichungstag der Anmeldung: 07.05.2014
(73) Patentinhaber: Robert Bosch GmbH, 70442 Stuttgart (DE)
(72) Erfinder: DEPONDT, Helmut, B-3010 Kessel-Lo (BE); BEX, Koen, B-3890 Jeuk/Limburg (BE); HERINCKX, Dirk, B-3350 Dries-Linter (BE)
(86) Internationale Anmeldenummer: PCT/EP2012/060328
(87) Internationale Veröffentlichungsnummer: WO 2013/000657

(56) Entgegenhaltungen:
- WO-A1-2009/092669
- DE-A1-102006 020 524
- US-A1- 2006 156 529
- US-A1- 2007 174 989

## Beschreibung

### Stand der Technik

Es ist bereits eine Wischvorrichtung, insbesondere eine Kraftfahrzeugscheibenwischvorrichtung, mit einer Halteeinheit, die ein Halteelement mit einem Längsführungskanal zur Führung eines Federelements aufweist, sowie mit einer Windabweisereinheit bekannt.

Aus der WO 2009/092669 A1 ist eine Wischvorrichtung mit den Merkmalen des Oberbegriffs des Anspruchs 1 bekannt.

### Offenbarung der Erfindung

Die Erfindung geht aus von einer Wischvorrichtung, insbesondere einer Kraftfahrzeugscheibenwischvorrichtung, mit einer Halteeinheit, die ein Halteelement mit einem Längsführungskanal zur Führung eines Federelements aufweist, sowie mit einer Windabweisereinheit.

Es wird vorgeschlagen, dass das Halteelement zumindest ein Befestigungsmittel aufweist, das mit einem freien Ende dem Längsführungskanal zugewandt und dazu vorgesehen ist, einen Formschluss mit der Windabweisereinheit zu bilden, wodurch die Wischvorrichtung besonders stabil ausgebildet werden kann. Unter einer "Halteeinheit" soll dabei in diesem Zusammenhang insbesondere eine Einheit verstanden werden, die dazu vorgesehen ist, die Windabweisereinheit mit einer Wischleiste zu verbinden. Unter einer "Wischleiste" soll in diesem Zusammenhang insbesondere eine Leiste verstanden werden, die dazu vorgesehen ist, eine Fahrzeugscheibe zu wischen. Bevorzugt ist die Wischleiste aus einem Gummimaterial ausgebildet. Unter einem "Halteelement" soll dabei in diesem Zusammenhang insbesondere ein Element verstanden werden, das dazu vorgesehen ist, eine Windabweisereinheit, ein eine Wischleiste formschlüssig zu verbinden. Unter einem "Längsfü rungskanal" soll in diesem Zusammenhang insbesondere ein Führungskanal verstanden werden, der sich parallel zu einer Längsrichtung der Halteeinheit erstreckt. Bevorzugt umfasst der Längsführungskanal einen Freiraum sowie zumindest eine den Freiraum begrenzende Kanalwand. Unter einer "Längsrichtung" soll in diesem Zusammenhang insbesondere eine Richtung verstanden werden, die sich im Wesentlichen parallel zu einer Längserstreckung des Halteelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Federelement" soll in diesem Zusammenhang insbesondere ein federelastisches Element verstanden werden, das zumindest eine Erstreckung aufweist, die in einem normalen Betriebszustand um zumindest 10 %, insbesondere um wenigstens 20 %, vorzugsweise um mindestens 30 % und besonders vorteilhaft um zumindest 50 % elastisch veränderbar ist, und das insbesondere eine von einer Veränderung der Erstreckung abhängige und vorzugsweise zu der Veränderung proportionale Gegenkraft erzeugt, die der Veränderung entgegenwirkt. Unter einem "Befestigungsmittel" soll in diesem Zusammenhang insbesondere ein Mittel verstanden werden, das dazu vorgesehen ist, einen Formschluss mit einem korrespondierenden Bauteil zu bilden. Unter "vorgesehen" soll insbesondere speziell ausgelegt und/oder ausgestattet verstanden werden.

In einer weiteren Ausgestaltung der Erfindung wird vorgeschlagen, dass das Halteelement zumindest eine Kanalwandung aufweist, die dazu vorgesehen ist, Anpresskräfte der Windabweisereinheit auf die Halteeinheit zu übertragen, wodurch die Wischvorrichtung besonders stabil und belastbar ausgeführt werden kann. Unter einer "Kanalwandung" soll in diesem Zusammenhang insbesondere eine Wandung verstanden werden, die an den Längsführungskanal angrenzt.

Ferner wird vorgeschlagen, dass die Windabweisereinheit in einem Coextrusionsverfahren hergestellt ist, wodurch eine Produktion der Windabweisereinheit besonders kostengünstig erfolgen und eine hohe Festigkeit der Windabweisereinheit erreicht werden kann. Unter einem "Coextrusionsverfahren" soll in diesem Zusammenhang insbesondere das Zusammenführen von zumindest zwei fremdartigen Kunststoffschmelzen vor dem Verlassen einer Profildüse verstanden werden.

Erfindungsgemäß weist die Windabweisereinheit zwei unterschiedlich harte Windabweiserteilelemente auf, wodurch vorteilhaft Gewicht reduziert und eine Festigkeit erhöht werden kann.

Des Weiteren wird vorgeschlagen, dass das härtere Windabweiserteilelement an den Befestigungsmitteln formschlüssig anliegt, wodurch eine besonders stabile Verbindung zwischen dem Windabweiserteilelement und der Halteeinheit erreicht werden kann.

In einer weiteren Ausgestaltung der Erfindung wird vorgeschlagen, dass das weichere Windabweiserteilelement einen Längskanal begrenzt, der einen fünfeckigen Querschnitt aufweist, wodurch das Windabweiserteilelement besonders verwindungssteif bei gleichzeitig geringem Gewicht ausgebildet werden kann. Unter "fünfeckig" soll in diesem Zusammenhang eine Kontur verstanden werden, die fünf Ecken aufweist. Die Ecken können je nach Anwendungsfall auch abgerundet sein.

Ferner wird vorgeschlagen, dass das weichere Windabweiserteilelement zumindest eine konkav ausgebildete Windabweiserseite aufweist, wodurch Windverwirbelungen vermieden und/oder Anpresskräfte erhöht werden können. Schließen die Befestigungsmittel mit Seitenwandungen des Halteelements einen stumpfen Winkel ein, können Luftverwirbelungen in einem Übergangsbereich zwischen dem Halteelement und der Windabweisereinheit vermieden werden. Bevorzugt ist ein Winkel kleiner als 70°. Besonders bevorzugt ist der Winkel kleiner als 65°.

### Zeichnungen

Weitere Vorteile ergeben sich aus der folgenden Zeichnungsbeschreibung. In der Zeichnung sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine Schnittdarstellung einer Wischvorrichtung mit einer Halteeinheit,
- Fig. 2: eine Schnittdarstellung eines weiteren Ausführungsbeispiels einer Wischvorrichtung mit einer Halteeinheit,
- Fig. 3: eine Schnittdarstellung eines weiteren Ausführungsbeispiels einer Wischvorrichtung mit einer Halteeinheit,
- Fig. 4: eine Schnittdarstellung eines weiteren Ausführungsbeispiels einer Wischvorrichtung mit einer Halteeinheit und
- Fig. 5: eine Schnittdarstellung eines weiteren Ausführungsbeispiels einer Wischvorrichtung mit einer Halteeinheit.

### Beschreibung der Ausführungsbeispiele

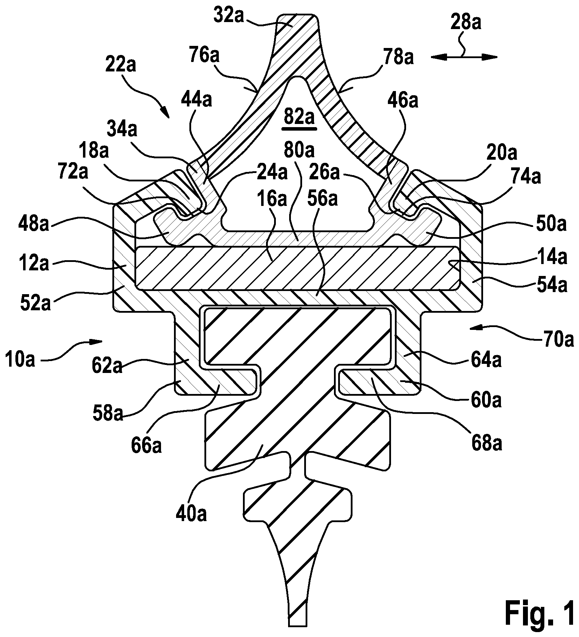

Figur 1 zeigt eine erfindungsgemäße Wischvorrichtung mit einer Halteeinheit 10a mit einem Halteelement 12a, das einen Längsführungskanal 14a zur Führung eines Federelements 16a aufweist, sowie eine Windabweisereinheit 22a in einer Schnittdarstellung. Die Schnittebene verläuft senkrecht zu einer Längsrichtung des Halteelements 12a.

Zur Führung des Federelements 16a weist der Längsführungskanal 14a Seitenwandungen 52a, 54a auf. An die Seitenwandungen 52a, 54a ist ferner eine Zwischenwandung 56a angeordnet, die den Längsführungskanal 14a in Richtung einer Wischleiste 40a abschließt. Die Seitenwandungen 52a, 54a erstrecken sich von der Zwischenwandung 56a aus in eine von der Wischleiste 40a abgewandte Richtung. An den Seitenwandungen 52a, 54a ist jeweils ein Befestigungsmittel 18a, 20a angeformt, das jeweils mit einem freien Ende 24a, 26a dem Längsführungskanal 14a zugewandt ist. Die Befestigungsmittel 18a, 20a sind L-förmig ausgebildet und grenzen an die Seitenwandungen 52a, 54a mit einem stumpfen Winkel von 60° an.

An der Zwischenwandung 56a sind zwei L-förmige Führungsprofile 58a, 60a der Halteeinheit 10a angeordnet. Die Führungsprofile 58a, 60a sind einstückig mit dem Halteelement 12a ausgebildet. Die Führungsprofile 58a, 60a weisen jeweils eine Seitenführung 62a, 64a und jeweils eine Vertikalführung 66a, 68a auf. Die Vertikalführungen 66a, 68a schließen mit den Seitenführungen 62a, 64a jeweils einen Winkel von 90° ein. Dabei zeigen die Vertikalführungen 66a, 68a zueinander hin. Die Seitenführungen 62a, 64a schließen jeweils einen Winkel von 90° zur Zwischenwandung 56a ein. Die Führungsprofile 58a, 60a weisen an ihren freien Enden der Vertikalführungen 66a, 68a in einander zugewandte Richtungen. Die Führungsprofile 58a, 60a und die Zwischenwandung 56a bilden eine Kederschiene 70a, in welche die Wischleiste 40a eingeführt ist.

Die Windabweisereinheit 22a ist in einem Coextrusionsverfahren aus zwei unterschiedlich harten Windabweiserteilelementen 32a, 34a hergestellt. Das erste Windabweiserteilelement 32a weist zwei nach außen hin konkav ausgebildete Windabweiserseiten 76a, 78a auf. Zur Verstärkung der Windabweisereinheit 22a weist das erste Windabweiserteilelement 32a einen Verbindungssteg 80a auf, der die konkaven Windabweiserseiten 76a, 78a miteinander verbindet. Der Verbindungssteg 80a und die Windabweiserseiten 76a, 78a begrenzen einen Längskanal 82a, der einen im Wesentlichen fünfeckigen Querschnitt aufweist.

Das erste Windabweiserteilelement 32a ist einstückig mit dem zweiten Windabweiserteilelement 34a ausgebildet und ist zur Abweisung von Fahrtwind vorgesehen. Das zweite Windabweiserteilelement 34a weist eine höhere Festigkeit und Härte auf als das erste Windabweiserteilelement 32a. Das erste Windabweiserteilelement 32a liegt an zwei Befestigungsstegen 44a, 46a an, die einstückig mit dem Verbindungssteg 80a ausgebildet sind. Die Befestigungsstege 44a, 46a schließen mit dem Verbindungssteg 80a einen Winkel von 60° ein. Das zweite Windabweiserteilelement 34a weist zwei Befestigungsnuten 72a, 74a auf, die einen Formschluss mit den Befestigungsmitteln 18a, 20a bilden.

Das Halteelement 12a ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die freien Enden 24a, 26a der Befestigungsmittel 18a, 20a sind vom zweiten Windabweiserteilelement 34a umschlossen. Das härtere Windabweiserteilelement 34a liegt dabei an den Befestigungsmitteln 18a, 20a formschlüssig an. Das härtere Windabweiserteilelement 34a weist zwei Auflagekörper 48a, 50a auf, die an den Befestigungsmitteln 18a, 20a und am Federelement 16a anliegen. Ein Verbindungssteg 80a verbindet die Auflagekörper 48a, 50a miteinander.

Das Federelement 16a ist in den Längsführungskanal 14a eingelassen. Das Federelement 16a ist aus einem Federstahl hergestellt und dazu vorgesehen, die Halteeinheit 10a elastisch auslenkbar zu formen.

Zu einer Montage wird zunächst das Federelement 16a in den Längsführungskanal 14a eingeführt. Anschließend wird die Wischleiste 40a in die Kederschiene 70a eingeschoben und bildet einen Formschluss mit dem Halteelement 12a. Die Windabweisereinheit 22a wird nun in das Halteelement 12a geschoben und ist dann formschlüssig mit diesem verbunden.

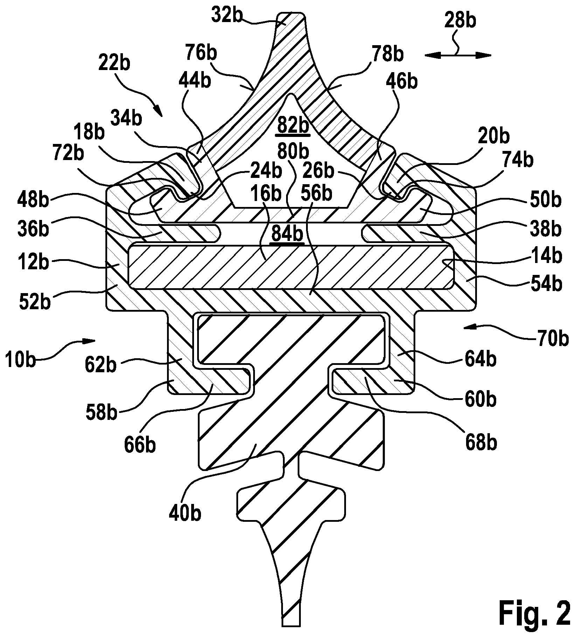

In den Figuren 2 bis 5 sind vier weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des ersten Ausführungsbeispiels verwiesen werden kann. Zur Unterscheidung der Ausführungsbeispiele ist der Buchstabe a in den Bezugszeichen des Ausführungsbeispiels in der Figur 1 durch die Buchstaben b bis e in den Bezugszeichen der Ausführungsbeispiele der Figuren 2 bis 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des ersten Ausführungsbeispiels verwiesen werden.

Figur 2 zeigt ein weiteres Ausführungsbeispiel einer erfindungsgemäßen Wischvorrichtung mit einer Halteeinheit 10b mit einem Halteelement 12b, das einen Längsführungskanal 14b zur Führung eines Federelements 16b aufweist, sowie eine Windabweisereinheit 22b in einer Schnittdarstellung. Die Schnittebene verläuft senkrecht zu einer Längsrichtung des Halteelements 12b. Die gezeigte Wischvorrichtung entspricht im Wesentlichen dem in Figur 1 gezeigten Ausführungsbeispiel.

Das Halteelement 12b weist zwei Kanalwandungen 36b, 38b auf, die an den Längsführungskanal 14b angrenzen. Die Kanalwandungen 36b, 38b erstrecken sich parallel zu einer Wischrichtung 28b und schließen den Längsführungskanal 14b in einer von einer Wischleiste 40b abgewandten Richtung teilweise ab. Das Halteelement 12b weist ferner eine Längsöffnung 84b auf, die den Längsführungskanal 14b zur Windabweisereinheit 22b hin öffnet.

Die Windabweisereinheit 22b ist in einem Coextrusionsverfahren aus zwei unterschiedlich harten Windabweiserteilelementen 32b, 34b hergestellt. Das erste Windabweiserteilelement 32b weist zwei nach außen hin konkav ausgebildete Windabweiserseiten 76b, 78b auf. Zur Verstärkung der Windabweisereinheit 22b weist das erste Windabweiserteilelement 32b einen Verbindungssteg 80b auf, der die konkaven Windabweiserseiten 76b, 78b miteinander verbindet. Der Verbindungssteg 80b und die Windabweiserseiten 76b, 78b begrenzen einen Längskanal 82b, der einen im Wesentlichen fünfeckigen Querschnitt aufweist.

Das härtere Windabweiserteilelement 34b weist zwei Auflagekörper 48b, 50b auf, die an Befestigungsmitteln 18b, 20b und an den Kanalwandungen 36b, 38b anliegen. Ein Verbindungssteg 80b verbindet die Auflagekörper 48b, 50b miteinander. Der Verbindungssteg 80b liegt an den Kanalwandungen 36b, 38b an. Das erste Windabweiserteilelement 32b liegt an zwei Befestigungsstegen 44b, 46b an, die einstückig mit dem Verbindungssteg 80b ausgebildet sind. Die Befestigungsstege 44b, 46b schließen mit dem Verbindungssteg 80b einen Winkel von 60° ein. Eine Breite des ersten Windabweiserteilelements 32b entspricht der doppelten Breite der Befestigungsstege 44b, 46b.

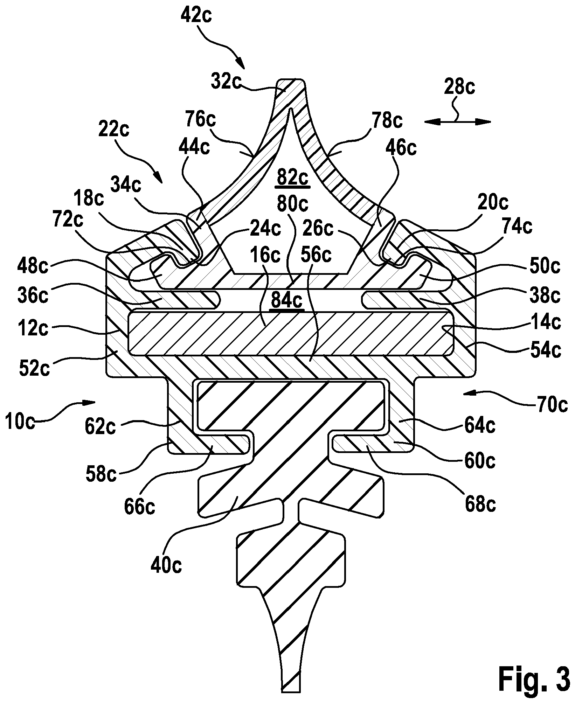

Figur 3 zeigt ein weiteres Ausführungsbeispiel einer erfindungsgemäßen Wischvorrichtung mit einer Halteeinheit 10c mit einem Halteelement 12c, das einen Längsführungskanal 14c zur Führung eines Federelements 16c aufweist, in einer Schnittdarstellung. Die Schnittebene verläuft senkrecht zu einer Längsrichtung des Halteelements 12c. Die gezeigte Wischvorrichtung entspricht im Wesentlichen dem in Figur 2 gezeigten Ausführungsbeispiel. Eine Breite eines ersten Windabweiserteilelements 32c entspricht der Breite von Befestigungsstegen 44c, 46c. Das erste Windabweiserteilelement 32c läuft in einem von einer Wischleiste 40c abgewandten Endbereich 42c spitzkantig zusammen.

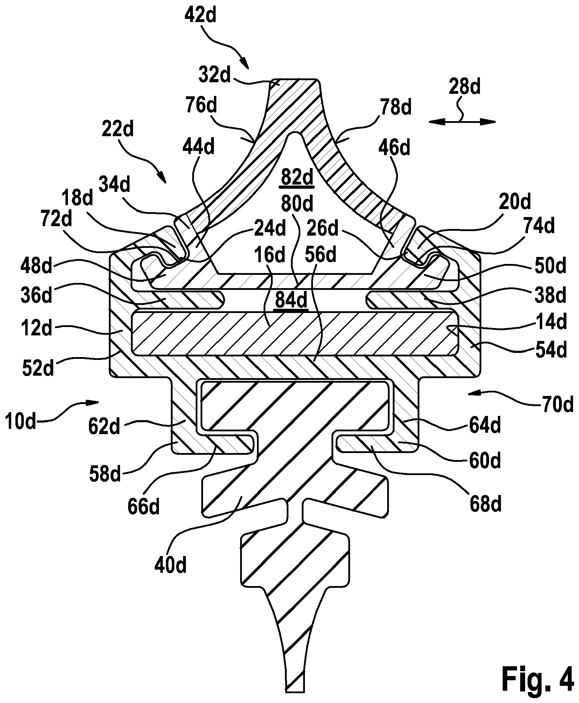

Figur 4 zeigt ein weiteres Ausführungsbeispiel einer erfindungsgemäßen Wischvorrichtung mit einer Halteeinheit 10d mit einem Halteelement 12d, das einen Längsführungskanal 14d zur Führung eines Federelements 16d aufweist, in einer Schnittdarstellung. Die Schnittebene verläuft senkrecht zu einer Längsrichtung des Halteelements 12d. Die gezeigte Wischvorrichtung entspricht im Wesentlichen dem in Figur 2 gezeigten Ausführungsbeispiel. Eine Breite eines ersten Windabweiserteilelements 32d entspricht der Breite der Befestigungsstege 44d, 46d. Das erste Windabweiserteilelement 32d läuft in einem von einer Wischleiste 40d abgewandten Endbereich 42d abgerundet zusammen.

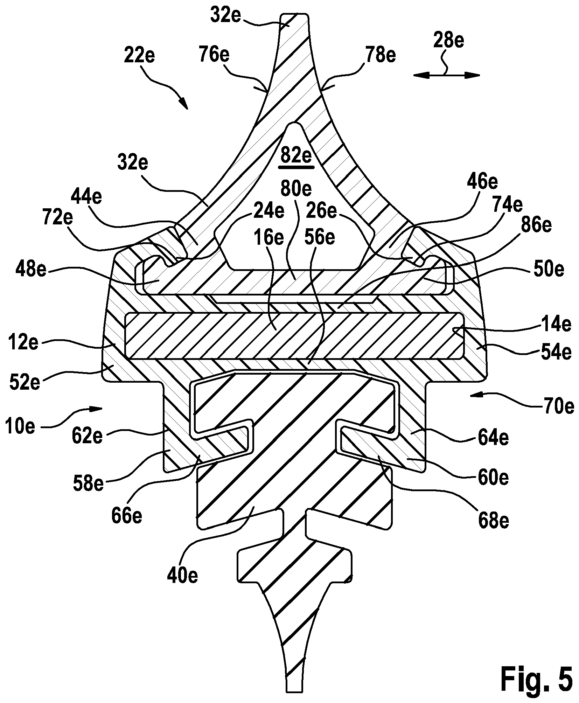

Figur 5 zeigt eine erfindungsgemäße Wischvorrichtung mit einer Halteeinheit 10e mit einem Halteelement 12e, das einen Längsführungskanal 14e zur Führung eines Federelements 16e aufweist, sowie eine Windabweisereinheit 22e in einer Schnittdarstellung. Die Schnittebene verläuft senkrecht zu einer Längsrichtung des Halteelements 12e.

Zur Führung des Federelements 16e weist der Längsführungskanal 14e Seitenwandungen 52e, 54e auf. An die Seitenwandungen 52e, 54e ist ferner eine Zwischenwandung 56e angeordnet, die den Längsführungskanal 14e in Richtung einer Wischleiste 40e abschließt. Die Seitenwandungen 52e, 54e erstrecken sich von der Zwischenwandung 56e aus in eine von der Wischleiste 40e abgewandte Richtung. Eine zweite Zwischenwandung 86e schließt den Längsführungskanal 14e in Richtung der Windabweisereinheit 22e ab. Damit ist der Längsführungskanal 14e vollständig umschlossen. An den Seitenwandungen 52e, 54e ist jeweils ein Befestigungsmittel 18e, 20e angeformt, das jeweils mit einem freien Ende 24e, 26e dem Längsführungskanal 14e zugewandt ist. Die Befestigungsmittel 18e, 20e sind L-förmig ausgebildet und grenzen an die Seitenwandungen 52e, 54e mit einem stumpfen Winkel von 60° an.

An der Zwischenwandung 56e sind zwei Führungsprofile 58e, 60e der Halteeinheit 10e angeordnet. Die Führungsprofile 58e, 60e sind einstückig mit dem Halteelement 12e ausgebildet. Die Führungsprofile 58e, 60e weisen jeweils eine Seitenführung 62e, 64e und jeweils eine Vertikalführung 66e, 68e auf. Die Vertikalführungen 66e, 68e schließen mit den Seitenführungen 62e, 64e jeweils einen spitzen Winkel von 77° ein. Dabei zeigen die Vertikalführungen 66e, 68e zueinander hin. Die Seitenführungen 62e, 64e schließen jeweils einen Winkel von 90° zur Zwischenwandung 56e ein. Die Führungsprofile 58e, 60e weisen an ihren freien Enden der Vertikalführungen 66e, 68e in einander zugewandte Richtungen. Die Führungsprofile 58e, 60e und die Zwischenwandung 56e bilden eine Kederschiene 70e, in welche die Wischleiste 40e eingeführt ist.

Die Windabweisereinheit 22e ist in einem Extrusionsverfahren hergestellt und weist ein Windabweiserteilelement 32e auf. Das Windabweiserteilelement 32e weist zwei nach außen hin konkav ausgebildete Windabweiserseiten 76e, 78e auf. Zur Verstärkung der Windabweisereinheit 22e weist das Windabweiserteilelement 32e einen Verbindungssteg 80e auf, der die konkaven Windabweiserseiten 76e, 78e miteinander verbindet. Der Verbindungssteg 80e und die Windabweiserseiten 76e, 78e begrenzen einen Längskanal 82e, der einen im Wesentlichen fünfeckigen Querschnitt aufweist.

Das Windabweiserteilelement 32e ist zur Abweisung von Fahrtwind vorgesehen. Das erste Windabweiserteilelement 32e weist zwei Befestigungsstege 44e, 46e auf, die einstückig mit dem Verbindungssteg 80e ausgebildet sind. Die Befestigungsstege 44e, 46e schließen mit dem Verbindungssteg 80e einen Winkel von 60° ein. Das Windabweiserteilelement 32e weist zwei Befestigungsnuten 72e, 74e auf, die jeweils einen Formschluss mit den Befestigungsmitteln 18e, 20e bilden.

Das Halteelement 12e ist in einem Extrusionsverfahren einstückig aus Polyethylen hergestellt. Ein Fachmann wird in diesem Zusammenhang verschiedene, als sinnvoll erscheinende Kunststoffe in Erwägung ziehen, wie insbesondere Polypropylen, Polyamid, Polyvinylchlorid und/oder Polystyrol.

Die freien Enden 24e, 26e der Befestigungsmittel 18e, 20e sind von einem zweiten Windabweiserteilelement 34e umschlossen. Das Windabweiserteilelement 32e liegt dabei an den Befestigungsmitteln 18e, 20e formschlüssig an. Das Windabweiserteilelement 32e weist zwei Auflagekörper 48e, 50e auf, die an den Befestigungsmitteln 18e, 20e und am Federelement 16e anliegen. Der Verbindungssteg 80e verbindet die Auflagekörper 48e, 50e miteinander.

Das Federelement 16e ist in den Längsführungskanal 14e eingelassen. Das Federelement 16e ist aus einem Federstahl hergestellt und dazu vorgesehen, die Halteeinheit 10e elastisch auslenkbar zu formen.

Zu einer Montage wird zunächst das Federelement 16e in den Längsführungskanal 14e eingeführt. Anschließend wird die Wischleiste 40e in die Kederschiene 70e eingeschoben und bildet einen Formschluss mit dem Halteelement 12e. Die Windabweisereinheit 22e wird nun in das Halteelement 12e geschoben und ist dann formschlüssig mit diesem verbunden.

## Patentansprüche

1. Wischvorrichtung, insbesondere Kraftfahrzeugscheibenwischvorrichtung, mit einer Halteeinheit (10a - 10e), die ein Halteelement (12a - 12e) mit einem Längsführungskanal (14a - 14e) zur Führung eines Federelements (16a - 16e) aufweist, sowie mit einer Windabweisereinheit (22a - 22), wobei das Halteelement (12a - 12e) zumindest ein Befestigungsmittel (18a - 18e, 20a - 20e) aufweist, das mit einem freien Ende (24a - 24e, 26a - 26e) dem Längsführungskanal (14a - 14e) zugewandt und dazu vorgesehen ist, einen Formschluss mit der Windabweisereinheit (22a - 22e) zu bilden, wobei der Längsführungskanal (14a - 14e) zur Führung des Federelements (16a - 16e) Seitenwandungen (52a - 52e, 54a - 54e) aufweist, die sich von einer Zwischenwandung (56a - 56e) aus, die den Längsführungskanal (14a - 14e) zu einer Wischleiste (40a - 40e) abschließt, in eine von der Wischleiste (40a - 40e) abgewandte Richtung erstrecken, **dadurch gekennzeichnet, dass** an den Seitenwandungen (52a-52e, 54a-54e) jeweils das Befestigungsmittel (18a - 18e, 20a - 20e) angeformt ist, wobei die Windabweisereinheit (22a - 22d) zwei unterschiedlich harte Windabweiserteilelemente (32a - 32d; 34a - 34d) aufweist und das härtere Windabweiserteilelement (34a - 34d) an den Befestigungsmitteln (18a - 18d, 20a - 20d) formschlüssig anliegt.

2. Wischvorrichtung nach Anspruch 1, **dadurch gekennzeichnet, dass** das Halteelement (12b - 12d) zumindest eine Kanalwandung (36b - 36d, 38b - 38d) aufweist, die dazu vorgesehen ist, Anpresskräfte der Windabweisereinheit (22b - 22d) auf die Halteeinheit (10b - 10d) zu übertragen.

3. Wischvorrichtung nach einem der vorhergehenden Ansprüche, **dadurch gekennzeichnet, dass** die Windabweisereinheit (22a - 22d) in einem Coextrusionsverfahren hergestellt ist.

4. Wischvorrichtung zumindest nach Anspruch 1, **dadurch gekennzeichnet, dass** das weichere Windabweiserteilelement (32a - 32e) einen Längskanal (82a - 82e) begrenzt, der einen fünfeckigen Querschnitt aufweist.

5. Wischvorrichtung zumindest nach Anspruch 1, **dadurch gekennzeichnet, dass** das weichere Windabweiserteilelement (32a - 32e) zumindest eine konkav ausgebildete Windabweiserseite (76a - 76e, 78a - 78e) aufweist.

6. Wischvorrichtung nach einem der vorhergehenden Ansprüche, **dadurch gekennzeichnet, dass** die Befestigungsmittel (18a - 18e, 20a - 20e) mit Seitenwandungen (52a - 52e, 54a - 54e) des Halteelements (12a - 12e) einen stumpfen Winkel einschließen.

7. Wischvorrichtung nach Anspruch 6, **dadurch gekennzeichnet, dass** der Winkel kleiner als 70° ist.

## Claims

1. Wiping device, in particular wiping device for a motor vehicle pane, comprising a retaining unit (10a - 10e) which has a retaining element (12a - 12e) with a longitudinal guide channel (14a - 14e) for guiding a spring element (16a - 16e), and comprising a spoiler unit (22a - 22), wherein the retaining element (12a - 12e) has at least one fastening means (18a - 18e, 20a - 20e) which, with a free end (24a - 24e, 26a - 26e), faces the longitudinal guide channel (14a - 14e) and is provided for forming an interlocking connection with the spoiler unit (22a - 22e), wherein the longitudinal guide channel (14a - 14e) for guiding the spring element (16a - 16e) has side walls (52a - 52e, 54a - 54e) which extend from an intermediate wall (56a - 56e), which ends the longitudinal guide channel (14a - 14e) towards a wiper strip (40a - 40e), in a direction facing away from the wiper strip (40a - 40e), **characterized in that** the respective fastening means (18a - 18e, 20a - 20e) is integrally formed on the side walls (52a - 52e, 54a - 54e), wherein the spoiler unit (22a - 22d) has two spoiler subelements (32a - 32d; 34a - 34d) differing in hardness and the harder spoiler subelement (34a - 34d) bears in an interlocking manner against the fastening means (18a - 18d, 20a - 20d).

2. Wiping device according to Claim 1, **characterized in that** the retaining element (12b - 12d) has at least one channel wall (36b - 36d, 38b - 38d) which is provided for transmitting press-on forces of the spoiler unit (22b - 22d) to the retaining unit (10b - 10d).

3. Wiping device according to either of the preceding claims, **characterized in that** the spoiler unit (22a - 22d) is produced in a coextrusion process.

4. Wiping device at least according to Claim 1, **characterized in that** the softer spoiler subelement (32a - 32e) bounds a longitudinal channel (82a - 82e) which has a pentangular cross section.

5. Wiping device at least according to Claim 1, **characterized in that** the softer spoiler subelement (32a - 32e) has at least one concavely formed spoiler side (76a - 76e, 78a - 78e).

6. Wiping device according to one of the preceding claims, **characterized in that** the fastening means (18a - 18e, 20a - 20e) enclose an obtuse angle with side walls (52a - 52e, 54a - 54e) of the retaining element (12a - 12e).

7. Wiping device according to Claim 6, **characterized in that** the angle is smaller than 70°.

## Revendications

1. Dispositif d'essuyage, en particulier dispositif d'essuie-glace de véhicule à moteur, avec une unité de maintien (10a - 10e), qui présente un élément de maintien (12a - 12e) avec un canal de guidage longitudinal (14a - 14e) pour le guidage d'un élément de ressort (16a - 16e), ainsi qu'avec une unité de déflecteur de vent (22a - 22e), dans lequel l'élément de maintien (12a - 12e) présente au moins un moyen de fixation (18a- 18e, 20a - 20e), qui est tourné avec une extrémité libre (24a - 24e, 26a - 26e) vers le canal de guidage longitudinal (14a - 14e) et qui est prévu pour former un assemblage par emboîtement avec l'unité de déflecteur de vent (22a - 22e), dans lequel le canal de guidage longitudinal (14a - 14e) présente pour le guidage de l'élément de ressort (16a - 16e) des parois latérales (52a - 52e, 54a - 54e), qui s'étendent à partir d'une paroi intermédiaire (56a - 56e), qui ferme le canal de guidage longitudinal (14a - 14e) vers une lame d'essuyage (40a - 40e), dans une direction détournée de la lame d'essuyage (40a - 40e), **caractérisé en ce que** le moyen de fixation (18a- 18e, 20a - 20e) est formé respectivement sur les parois latérales (52a - 52e, 54a - 54e), dans lequel l'unité de déflecteur de vent (22a - 22d) présente deux éléments partiels de déflecteur de vent de dureté différente (32a - 32d; 34a - 34d) et l'élément partiel de déflecteur de vent plus dur (34a - 34d) s'applique par emboîtement sur les moyens de fixation (18a - 18d, 20a - 20d).

2. Dispositif d'essuyage selon la revendication 1, **caractérisé en ce que** l'élément de maintien (12b - 12d) présente au moins une paroi de canal (36b - 36d, 38b - 38d), qui est prévue pour transmettre des forces d'application de l'unité de déflecteur de vent (22b - 22d) sur l'unité de maintien (10b - 10d).

3. Dispositif d'essuyage selon l'une quelconque des revendications précédentes, **caractérisé en ce que** l'unité de déflecteur de vent (22a - 22d) est fabriquée par un procédé de co-extrusion.

4. Dispositif d'essuyage au moins selon la revendication 1, **caractérisé en ce que** l'élément partiel de déflecteur de vent plus - souple (32a - 32e) limite un canal longitudinal (82a - 82e), qui présente une section transversale pentagonale.

5. Dispositif d'essuyage au moins selon la revendication 1, **caractérisé en ce que** l'élément partiel de déflecteur de vent plus souple (32a - 32e) présente au moins un côté de déflecteur de vent (76a - 76e, 78a - 78e) de forme concave.

6. Dispositif d'essuyage selon l'une quelconque des revendications précédentes, **caractérisé en ce que** les moyens de fixation (18a - 18e, 20a - 20e) forment avec des parois latérales (52a - 52e, 54a - 54e) de l'élément de maintien (12a - 12e) un angle obtus.

7. Dispositif d'essuyage selon la revendication 6, **caractérisé en ce que** l'angle est inférieur à 70°.
